# EUROPEAN PATENT APPLICATION

(11) **EP 4 067 844 A1**
(43) Date of publication of application: **05.10.2022**
(21) Application number: 19954541.9
(22) Date of filing: 29.11.2019
(51) Int. Cl.: G01J 3/52

(54) **FACIAL RECOGNITION ENVIRONMENT DETERMINATION METHOD, FACIAL RECOGNITION ENVIRONMENT DETERMINATION SYSTEM, FACIAL RECOGNITION ENVIRONMENT DETERMINATION DEVICE, AND NON-TRANSITORY COMPUTER-READABLE MEDIUM**

(71) Applicant: NEC Corporation, 108-8001 Tokyo (JP)
(72) Inventor: FUNAYAMA Chisato, Tokyo 108-8001 (JP)
(74) Representative: Betten & Resch
(86) International application number: PCT/JP2019/046762
(87) International publication number: WO 2021/106187

(57) **Abstract**

A face authentication environment determination method according to the present disclosure includes: capturing an image of a skin color chart (10) including a first skin color display part (BK) configured to show a skin color of a Negroid and a second skin color display part (WT) configured to show a skin color of a Caucasoid, the first and the second skin color display parts being formed on a substrate; analyzing luminance of each of the first and the second skin color display parts (BK) and (WT) in the captured image of the skin color chart (10); and determining whether or not an image capturing environment is suitable for face authentication based on the luminance of each of the first and the second skin color display parts (BK) and (WT).

## Description

### Technical Field

The present disclosure relates to a face authentication environment determination method, a face authentication environment determination system, a face authentication environment determination apparatus, and a non-transitory computer readable medium.

### Background Art

In recent years, a face authentication system that specifies a person by using a face image of the person captured by a camera has been developed. Note that, in the face image of a person with white skin such as Caucasoid, blown-out highlights tend to occur in a bright environment, and in the face image of a person with black skin such as Negroid, blocked-up shadows tend to occur in a dark environment.

When such blown-out highlights or blocked-up shadows occur in the face image, face authentication may not be performed accurately. Therefore, for example, when a camera for a face authentication system is installed, it is necessary to determine whether or not the environment for performing face authentication (hereinafter referred to as a face authentication environment) is appropriate. The face authentication environment varies depending on, for example, the position where a camera is installed, the orientation of the camera, and the brightness of a place where a face image is captured.

Incidentally, Patent Literature 1 discloses a skin color chart for evaluating skin color reproduction in a color photograph or the like. Note that, in this specification, the terms "Negroid", "Caucasoid", and "Mongoloid" are used in order to describe differences in skin color; however, the use of these terms is not intended to discriminate against any race.

### Citation List

### Patent Literature

Patent Literature 1: Japanese Unexamined Patent Application Publication No. 2001-074556

### Summary

### Technical Problem

The inventor has found the following problem regarding the determination of a face authentication environment.

There is a problem that it is not convenient for various reasons to have white and black people actually present in the face authentication environment each time the face authentication environment is determined.

Note that the skin color chart disclosed in Patent Literature 1 is a color chart for evaluating skin color reproduction in a color photograph or the like, and Patent Literature 1 discloses and suggests nothing about face authentication.

In view of the problem described above, an object of the present disclosure is to provide a face authentication environment determination method that is very convenient.

### Solution to Problem

A face authentication environment determination method according to the present disclosure includes:
capturing an image of a skin color chart including a first skin color display part configured to show a skin color of a Negroid and a second skin color display part configured to show a skin color of a Caucasoid, the first and the second skin color display parts being formed on a substrate;
analyzing luminance of each of the first and the second skin color display parts in the captured image of the skin color chart; and
determining whether or not an image capturing environment is suitable for face authentication based on the luminance of each of the first and the second skin color display parts.

A face authentication environment determination system according to the present disclosure includes:
a skin color chart including a first skin color display part configured to show a skin color of a Negroid and a second skin color display part configured to show a skin color of a Caucasoid, the first and the second skin color display parts being formed on a substrate;
image capturing means for capturing an image of the skin color chart;
image analysis means for analyzing luminance of each of the first and the second skin color display parts in the image of the skin color chart captured by the image capturing means; and
environment determination means for determining whether or not an image capturing environment is suitable for face authentication based on the luminance of each of the first and the second skin color display parts.

A face authentication environment determination apparatus according to the present disclosure includes:
image analysis means for analyzing luminance of each of a first skin color display part configured to show a skin color of a Negroid and a second skin color display part configured to show a skin color of a Caucasoid in an image of a skin color chart including the first and the second skin color display parts formed on a substrate; and
environment determination means for determining whether or not an image capturing environment is suitable for face authentication based on the luminance of each of the first and the second skin color display parts.

A non-transitory computer readable medium according to the present disclosure stores a face authentication environment determination program for causing a computer to:
analyze luminance of each of a first skin color display part configured to show a skin color of a Negroid and a second skin color display part configured to show a skin color of a Caucasoid in an image of a skin color chart including the first and the second skin color display parts formed on a substrate; and
determine whether or not an image capturing environment is suitable for face authentication based on the luminance of each of the first and the second skin color display parts.

Another face authentication environment determination method according to the present disclosure includes:
analyzing luminance of each of a first skin color display part configured to show a skin color of a Negroid and a second skin color display part configured to show a skin color of a Caucasoid in an image of a skin color chart including the first and the second skin color display parts formed on a substrate; and
determining whether or not an image capturing environment is suitable for face authentication based on the luminance of each of the first and the second skin color display parts.

### Advantageous Effects

According to the present disclosure, it is possible to provide a face authentication environment determination method that is very convenient.

### Brief Description of Drawings

Fig. 1 is a block diagram showing a configuration of a face authentication environment determination system according to a first example embodiment;
Fig. 2 is a plan view showing a skin color chart 10 in the face authentication environment determination system according to the first example embodiment;
Fig. 3 is a graph showing an example of a spectral reflectance of a skin color of each of Negroid, Caucasoid, and Mongoloid;
Fig. 4 is a flowchart showing a face authentication environment determination method according to the first example embodiment;
Fig. 5 is a plan view showing the skin color chart 10 in a face authentication environment determination system according to a second example embodiment;
Fig. 6 is a block diagram showing a configuration of a face authentication environment determination system according to a third example embodiment;
Fig. 7 is a plan view showing the skin color chart 10 in the face authentication environment determination system according to the third example embodiment;
Fig. 8 is a flowchart showing a face authentication environment determination method according to the third example embodiment;
Fig. 9 is a plan view showing the skin color chart in a face authentication environment determination system according to a fourth example embodiment; and
Fig. 10 is a plan view showing the skin color chart in a face authentication environment determination system according to a fifth example embodiment.

### Description of Embodiments

Specific example embodiments will be described hereinafter in detail with reference to the drawings. The same or corresponding elements are denoted by the same reference symbols throughout the drawings, and redundant descriptions will be omitted as necessary for the clarification of the description.

### (First Example Embodiment)

### <Configuration of Face authentication environment determination system>

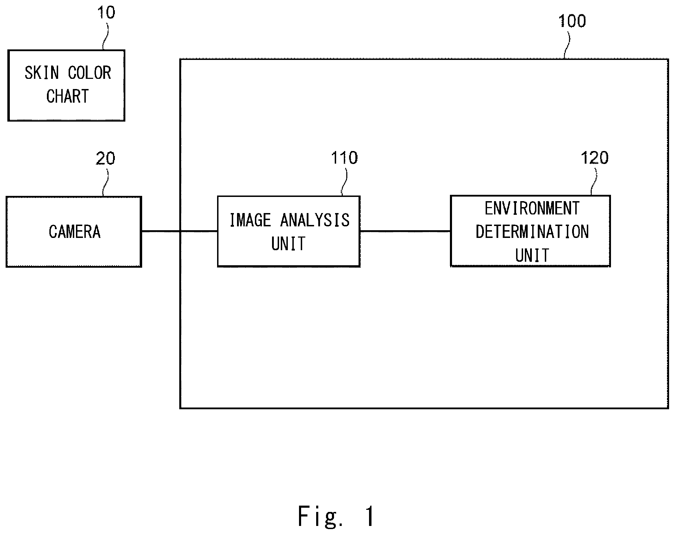

First, a face authentication environment determination system according to a first example embodiment will be described with reference to Fig. 1. Fig. 1 is a block diagram showing a configuration of the face authentication environment determination system according to the first example embodiment. This system determines whether or not the environment is suitable for face authentication in which no blown-out highlights occur even in the face image of a person with white skin and no blocked-up shadows occur even in the face image of a person with black skin.

As shown in Fig. 1, the face authentication environment determination system according to the first example embodiment includes a skin color chart 10, a camera 20, and a face authentication environment determination apparatus 100.

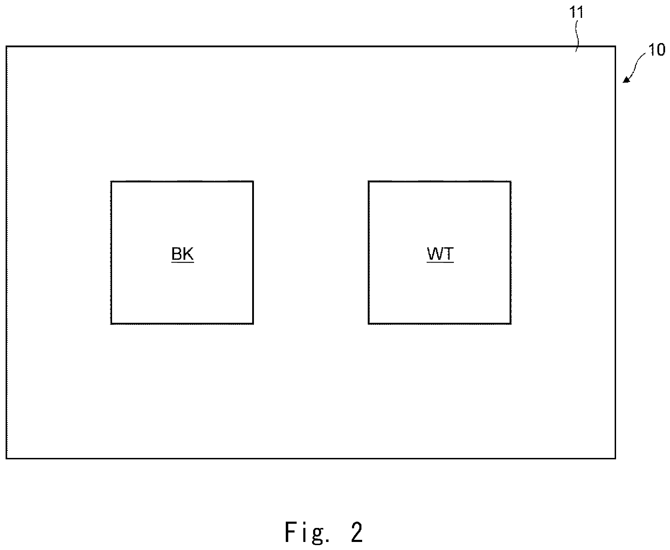

Fig. 2 is a plan view showing the skin color chart 10 in the face authentication environment determination system according to the first example embodiment.

As shown in Fig. 2, in the skin color chart 10, a first skin color display part BK showing a skin color of Negroid and a second skin color display part WT showing a skin color of Caucasoid are formed on a substrate. Details of the skin color chart 10 will be described later.

The camera 20 is image capturing means for capturing an image of the skin color chart 10.

The face authentication environment determination apparatus 100 includes an image analysis unit 110 and an environment determination unit 120.

Note that, although the face authentication environment determination apparatus 100 is implemented, for example, by a computer apparatus such as a personal computer or a server that executes a program, it may instead be implemented by one apparatus or a plurality of apparatuses on a network. Further, the camera 20 may be provided inside the face authentication environment determination apparatus 100.

The image analysis unit 110 is connected to the camera 20 so that they can communicate with each other. They may be connected to each other wirelessly or by wire. The image analysis unit 110 analyzes the luminance of each of the first skin color display part BK and the second skin color display part WT in the image of the skin color chart 10 captured by the camera 20. For example, the image analysis unit 110 converts the luminance of each of the first skin color display part BK and the second skin color display part WT in the image of the skin color chart 10 into a numerical value of 256 levels of 0 to 255. Normally, the luminance of the second skin color display part WT showing a white skin color is larger than that of the first skin color display part BK showing a black skin color, and a luminance value from 0 to 255 of the second skin color display part WT is also larger than that of the first skin color display part BK.

The environment determination unit 120 determines whether or not an image capturing environment is suitable for face authentication based on the luminance of each of the first skin color display part BK and the second skin color display part WT. For example, when a luminance value of each of the first skin color display part BK and the second skin color display part WT is within a predetermined reference range, the environment determination unit 120 determines that it is suitable for face authentication. Conversely, when the luminance value of at least one of the first skin color display part BK and the second skin color display part WT is outside the aforementioned reference range, the environment determination unit 120 determines that it is not suitable for face authentication.

The aforementioned reference range is determined in advance as a range of luminance values suitable for face authentication. Qualitatively, this range is a range of luminance values in which no blocked-up shadows or blown-out highlights occur. A specific numerical range is appropriately determined based on the performance of a camera or a face authentication engine to be used. Data of the reference range is stored, for example, in a storage unit (not shown) in the face authentication environment determination apparatus 100. The storage unit may be provided inside or outside the environment determination unit 120.

Instead of using actual images of white people and black people, the face authentication environment determination system according to the first example embodiment uses an image of the skin color chart 10 in which the first skin color display part BK showing a skin color of Negroid and the second skin color display part WT showing a skin color of Caucasoid are formed. Therefore, there is no need to have white and black people actually present in a face authentication environment when the face authentication environment is determined, and thus it is very convenient.

### <Structure of Skin color chart>

Next, the details of the skin color chart 10 will be described with reference to Fig. 2.

A substrate 11 is made of, for example, cardboard, plastic, wood, metal, glass and combinations thereof, but is not limited to being made of any particular material. When the substrate 11 is made of cardboard, plastic, and wood, it is lightweight and thus can be easily carried. In the example shown in Fig. 2, the substrate 11 has a rectangular planar shape, but is not limited thereto. As an example, the width of the substrate 11 is about 200 mm and the length thereof is about 300 mm, but the size of the substrate 11 is not limited to a particular size. In order to prevent reflection, it is preferable that, for example, the color of the substrate 11 be black having a reflectance of 0, but the color of the substrate 11 is not limited to a particular color.

The color of the first skin color display part BK is not limited to a particular black color as long as it shows one of the skin colors of Negroid. However, when the color of the first skin color display part BK is, for example, an average skin color of Negroid, face authentication may not be performed accurately. Specifically, even in the environment which it has been determined is suitable for face authentication, the environment may actually be too dark and blocked-up shadows may occur in the face image of a person whose skin is blacker than the first skin color display part BK.

Therefore, the first skin color display part BK may show a skin color near the limit of the distribution of the skin colors of black people (Negroid) on the blackest part of the distribution. Specifically, colors can be defined using a CIE L^{∗}a^{∗}b^{∗} color space standardized by the International Commission on Illumination (CIE) in 1976. Lightness L^{∗} of a skin color in the first skin color display part BK expressed in the CIE L^{∗}a^{∗}b^{∗} color space satisfies, for example, 20≤L^{∗}≤37. An average skin color of Negroid is lighter than the aforementioned skin color and the value of L^{∗} is greater than 37. The lightness L^{∗} is more preferably 20≤L^{∗}≤29.

Further, chromaticity a^{∗} and chromaticity b^{∗} of the first skin color display part BK satisfy, for example, 8≤a^{∗}≤12 and 7≤b^{∗}≤10, respectively. The chromaticity a^{∗} and the chromaticity b^{∗} are more preferably 9≤a^{∗}≤11 and 8≤b^{∗}≤9, respectively.

Note that, in the example shown in Fig. 2, the first skin color display part BK has a square planar shape, but is not limited thereto.

The color of the second skin color display part WT is not limited to a particular white color as long as it shows one of the skin colors of Caucasoid. However, when the color of the second skin color display part WT is, for example, an average skin color of Caucasoid, face authentication may not be performed accurately. Specifically, even in the environment which it has been determined is suitable for face authentication, the environment may actually be too bright and blown-out highlights may occur in the face image of a person whose skin is whiter than the second skin color display part WT.

Therefore, the second skin color display part WT may show a skin color near the limit of the distribution of the skin colors of white people (Caucasoid) on the whitest part of the distribution. Specifically, lightness L^{∗} of a skin color in the second skin color display part WT expressed in the CIE L^{∗}a^{∗}b^{∗} color space satisfies, for example, 74≤L^{∗}≤81. An average skin color of Caucasoid is darker than the aforementioned skin color and the value of L^{∗} is smaller than 74. The lightness L^{∗} is more preferably 78≤L^{∗}≤81.

Further, chromaticity a^{∗} and chromaticity b^{∗} of the second skin color display part WT satisfy, for example, 10≤a^{∗}≤12 and 23≤b^{∗}≤25, respectively. The chromaticity a^{∗} and the chromaticity b^{∗} are more preferably a^{∗}=11 and b^{∗}=24, respectively.

Note that, in the example shown in Fig. 2, the first skin color display part BK has a square planar shape, but is not limited thereto.

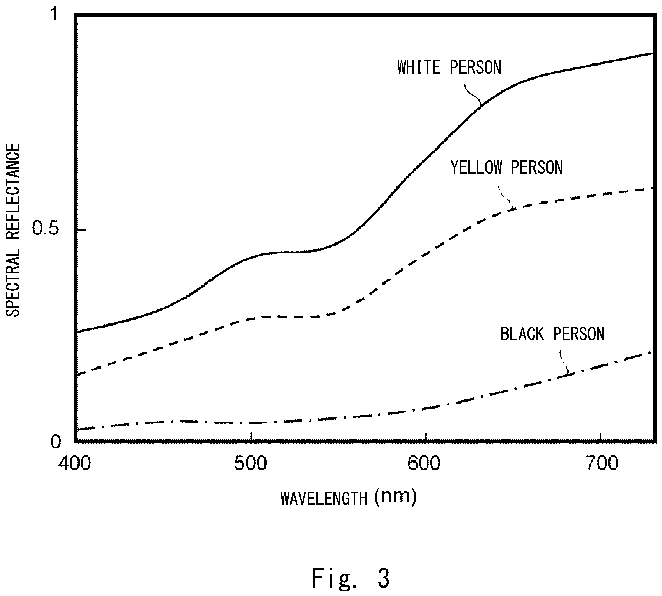

Note that Fig. 3 is a graph showing an example of a spectral reflectance of a skin color of each of Negroid, Caucasoid, and Mongoloid. In Fig. 3, the horizontal axis indicates wavelengths (nm), and the vertical axis indicates the spectral reflectance. As shown in Fig. 3, at each wavelength, the highest spectral reflectance is that of the Caucasoid, the second highest spectral reflectance is that of the Mongoloid, and the lowest spectral reflectance is that of the Negroid. For example, when measurement is performed using a spectrophotometric colorimeter, the values of L^{∗}, a^{∗}, and b^{∗} in the corresponding CIE L^{∗}a^{∗}b^{∗} color space are obtained together with data of a spectral reflectance like the one shown in Fig. 3. A large amount of data of L^{∗}, a^{∗}, and b^{∗} of the skin colors of black and white people are acquired and then a range of the aforementioned values can be determined.

As described above, when the first skin color display part BK in the skin color chart 10 shows the skin color near the limit of the distribution of the skin colors of black people on the blackest part of the distribution, it is extremely unlikely that a person whose skin is blacker than the first skin color display part BK will be a person on whom face authentication is to be performed. Therefore, in the environment which it has been determined using the aforementioned skin color chart 10 is suitable for face authentication, it is also extremely unlikely that blocked-up shadows will occur in the face image and then face authentication cannot be performed.

Similarly, when the second skin color display part WT in the skin color chart 10 shows the skin color near the limit of the distribution of the skin colors of white people on the whitest part of the distribution, it is extremely unlikely that a person whose skin is whiter than the second skin color display part WT will be a person on whom face authentication is to be performed. Therefore, in the environment which it has been determined using the aforementioned skin color chart 10 is suitable for face authentication, it is also extremely unlikely that blown-out highlights will occur in the face image and then face authentication cannot be performed.

As described above, by using the aforementioned skin color chart 10, it is possible to more appropriately determine a face authentication environment.

### <Method for Manufacturing Skin color chart>

Next, a method for manufacturing a skin color chart according to the first example embodiment will be described with reference to Fig. 2. The first skin color display part BK is formed on the substrate 11 and the second skin color display part WT is formed on the same. One of the first skin color display part BK and the second skin color display part WT may be formed first on the substrate 11, or these two display parts may be formed simultaneously.

Although a specific example of a method for manufacturing a skin color chart according to the first example embodiment will be described below, the method is not limited to this specific example.

First, the first skin color display part BK and the second skin color display part WT prepared in advance are stuck on a mount made of cardboard. For example, paints that have been adjusted to the colors of the first skin color display part BK and the second skin color display part WT are respectively applied to pieces of paper, whereby the first skin color display part BK and the second skin color display part WT can be prepared. The paint is, for example, a non-glossy lacquer paint, but is not limited to a particular paint.

Next, a black cardboard of the same size as that of the mount is prepared, and parts of the black cardboard corresponding to the first skin color display part BK and the second skin color display part WT that have been stuck on the mount are cut out. Then the black cardboard and the mount on which the first skin color display part BK and the second skin color display part WT have been stuck are bonded to each other. Note that the black cardboard has been processed so that the reflectance of the surface thereof becomes 0 (zero).

In this way, the skin color chart 10 can be manufactured. In the skin color chart 10 manufactured according to this specific example, the substrate 11 is formed of a mount and a black cardboard.

### <Face authentication environment determination method>

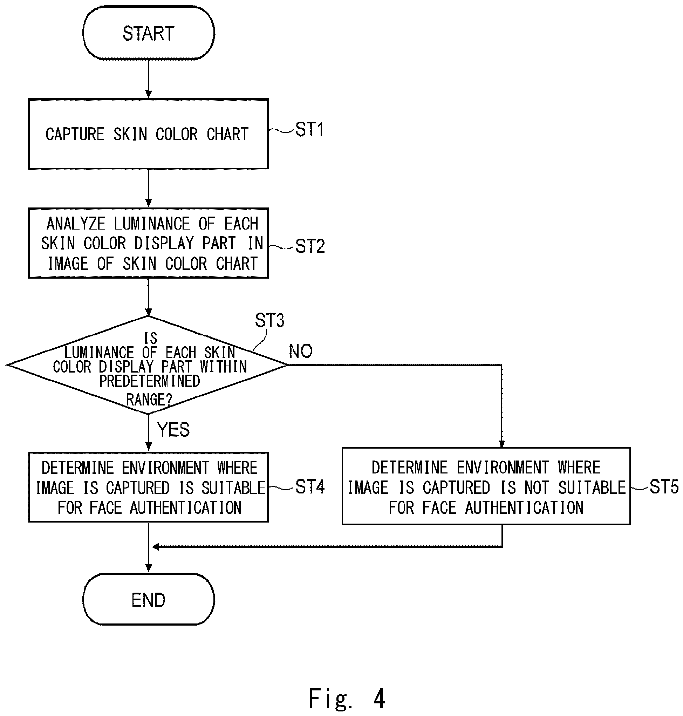

Next, a face authentication environment determination method according to the first example embodiment will be described with reference to Fig. 4. Fig. 4 is a flowchart showing the face authentication environment determination method according to the first example embodiment. In the description of Fig. 4, Figs. 1 and 2 are referred to as appropriate.

First, as shown in Fig. 4, the skin color chart 10 in which the first skin color display part BK and the second skin color display part WT are formed on the substrate 11 is captured by the camera 20 (Step ST1).

Next, the image analysis unit 110 analyzes luminance of each of the first skin color display part BK and the second skin color display part WT in the captured image of the skin color chart (Step ST2).

Next, the environment determination unit 120 determines whether or not the image capturing environment is suitable for face authentication based on the luminance of each of the first skin color display part BK and the second skin color display part WT. Specifically, as shown in Fig. 4, the environment determination unit 120 determines whether or not the luminance of each of the first skin color display part BK and the second skin color display part WT is within a predetermined reference range (Step ST3).

If a luminance value of each of the first skin color display part BK and the second skin color display part WT is within a predetermined reference range (YES in Step ST3), the environment determination unit 120 determines that the image capturing environment is suitable for face authentication (Step ST4). If the luminance value of at least one of the first skin color display part BK and the second skin color display part WT is outside the aforementioned reference range (NO in Step ST3), the environment determination unit 120 determines that the image capturing environment is not suitable for face authentication (Step ST5).

Instead of using actual images of white people and black people, the face authentication environment determination method according to the first example embodiment uses an image of the skin color chart 10 in which the first skin color display part BK showing a skin color of Negroid and the second skin color display part WT showing a skin color of Caucasoid are formed. Therefore, there is no need to have white and black people actually present in a face authentication environment when the face authentication environment is determined, and thus it is very convenient.

### (Second Example Embodiment)

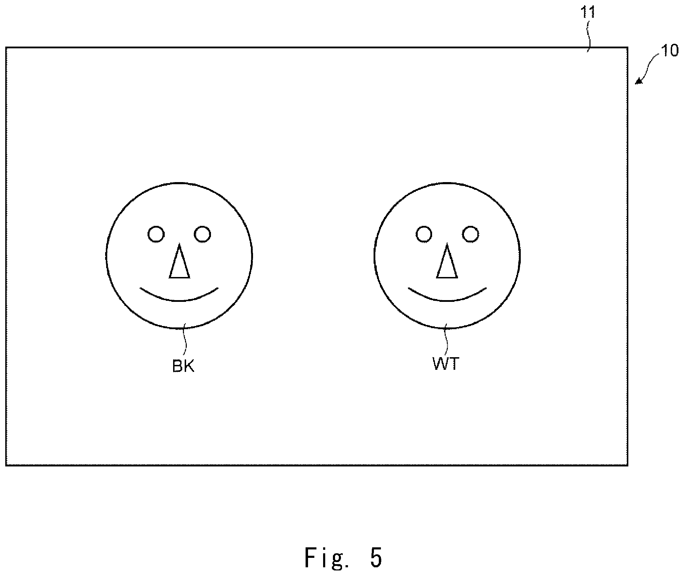

Next, a skin color chart in a face authentication environment determination system according to a second example embodiment will be described with reference to Fig. 5. Fig. 5 is a plan view showing the skin color chart 10 in the face authentication environment determination system according to the second example embodiment.

In the skin color chart 10 in the face authentication environment determination system according to the first example embodiment shown in Fig. 2, each of the first skin color display part BK and the second skin color display part WT is formed in a flat shape (formed so as to be flat). On the other hand, in the skin color chart 10 in the face authentication environment determination system according to the second example embodiment shown in Fig. 5, each of the first skin color display part BK and the second skin color display part WT is formed in a three-dimensional shape imitating a human face. That is, in each of the first skin color display part BK and the second skin color display part WT, projections and recesses imitating a human face are formed.

In a case in which the skin color chart 10 shown in Fig. 2 is used, for example, blocked-up shadows may occur in a recessed part of the face (e.g., a part of the face near the shadow formed by the nose) in the face image of Negroid, and hence there is a possibility that face authentication cannot be performed even in the environment which it has been determined is suitable for face authentication. Alternatively, for example, blown-out highlights may occur in a projection part of the face (e.g., a part of the face near the top of the nose) in the face image of Caucasoid and hence there is a possibility that face authentication cannot be performed.

On the other hand, in a case in which the skin color chart 10 shown in Fig. 5 is used, when a face authentication environment is determined, it is possible to determine that the environment in which blocked-up shadows occur in the recessed part and the like of the first skin color display part BK having a three-dimensional shape imitating a human face is not suitable for face authentication. Further, it is possible to determine that the environment in which blown-out highlights occur in the projection part and the like of the second skin color display part WT having a three-dimensional shape imitating a human face is also not suitable for face authentication.

Therefore, by using the skin color chart 10 according to this example embodiment, it is possible to further appropriately determine a face authentication environment.

The structures other than the above ones are similar to those of the first example embodiment, and thus the descriptions thereof will be omitted.

### (Third Example Embodiment)

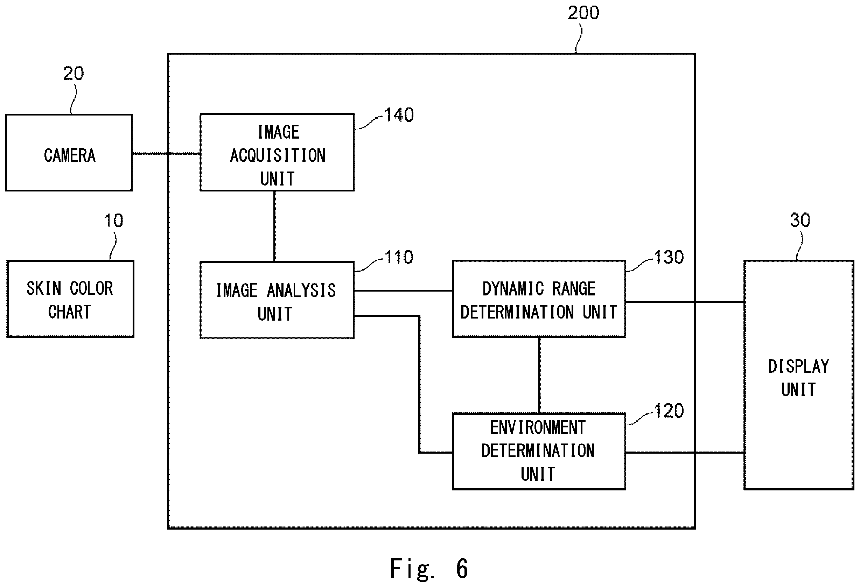

Next, a face authentication environment determination system according to a third example embodiment will be described with reference to Fig. 6. Fig. 6 is a block diagram showing a configuration of the face authentication environment determination system according to the third example embodiment. As shown in Fig. 6, the face authentication environment determination system according to this example embodiment includes a face authentication environment determination apparatus 200 instead of the face authentication environment determination apparatus 100 shown in Fig. 1, and further includes a display unit 30.

The face authentication environment determination apparatus 200 includes a dynamic range determination unit 130 and an image acquisition unit 140 in addition to the image analysis unit 110 and the environment determination unit 120 shown in Fig. 1.

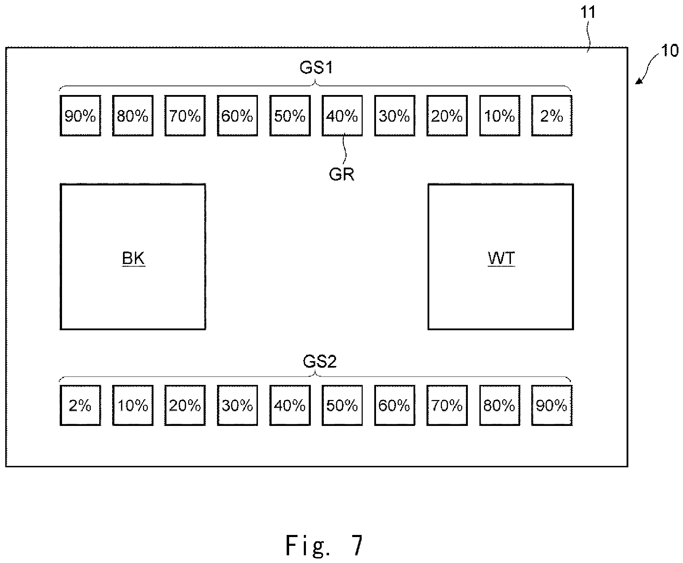

A skin color chart in the face authentication environment determination system according to the third example embodiment will be described with reference to Fig. 7. Fig. 7 is a plan view showing the skin color chart in the face authentication environment determination system according to the third example embodiment.

The skin color chart 10 shown in Fig. 7 includes, in addition to the skin color chart 10 shown in Fig. 2, gray scale parts GS1 and GS2 formed of a plurality of gray display parts GR having different reflectances.

In the example shown in Fig. 7, each of the two gray scale parts GS1 and GS2 includes 10 of the gray display parts GR having reflectances of 2 to 90%. Specifically, the reflectances of the gray display parts GR are 2%, 10%, 20%, 30%, 40%, 50%, 60%, 70%, 80%, and 90%.

In the example shown in Fig. 7, in the gray scale parts GS1 and GS2, the 10 gray display parts GR are arranged in a row along the long side of the rectangular skin color chart 10. Further, the gray scale parts GS1 and GS2 are disposed so as to be opposed to each other with the first skin color display part BK and the second skin color display part WT interposed therebetween.

Referring back to Fig. 6, the description will be continued.

Also in the face authentication environment determination apparatus 200 according to this example embodiment, the image analysis unit 110 analyzes luminance of each of the first skin color display part BK and the second skin color display part WT in the image of the skin color chart 10. Further, the image analysis unit 110 analyzes luminance of each of the plurality of gray display parts GR in the gray scale parts GS1 and GS2. For example, the image analysis unit 110 converts the luminance of each of 20 of the gray display parts GR in the image of the skin color chart 10 into a numerical value of 256 levels of 0 to 255. Normally, as a reflectance of 2% to 90% of each gray display part GR increases, a luminance value of each gray display part GR increases.

The dynamic range determination unit 130 determines whether or not the dynamic range is appropriate based on the luminance of each of 20 of the gray display parts GR in the image of the skin color chart 10. For example, when the luminance values of the adjacent gray display parts GR are the same, the dynamic range determination unit 130 determines that the dynamic range is inappropriate. Further, in the adjacent gray display parts GR, when the luminance value of the gray display part GR having the higher reflectance is smaller than the luminance value of the gray display part GR having the lower reflectance, the dynamic range determination unit 130 determines that the dynamic range is inappropriate.

As a specific example, when the luminance value of each of the adjacent gray display parts GR having the reflectances of 90% and 80% is the maximum value of 255, the dynamic range determination unit 130 determines that the dynamic range is inappropriate. Alternatively, when the luminance value of each of the adjacent gray display parts GR having the reflectances of 2% and 10% is the lowest value of 0, the dynamic range determination unit 130 determines that the dynamic range is inappropriate.

The display unit 30 displays a result of the determination by the environment determination unit 120 and a result of the determination by the dynamic range determination unit 130.

The image acquisition unit 140 is connected to the camera 20 so that they can communicate with each other. They may be connected to each other wirelessly or by wire. The image acquisition unit 140 acquires an image of the skin color chart 10 captured by the camera 20. Then the image analysis unit 110 analyzes the luminance of each of the first skin color display part BK and the second skin color display part WT in the image of the skin color chart 10 acquired by the image acquisition unit 140. In this way, the image analysis unit 110 may acquire the image of the skin color chart 10 via the image acquisition unit 140 and analyze it.

Note that, in the example shown in Fig. 7, each of the gray display parts GR has a square planar shape, but is not limited thereto. Further, the number of gray display parts GR included in the gray scale parts GS1 and GS2 and the reflectance of each of the gray display parts GR may be determined as appropriate. Further, the number of gray scale parts may be one.

The structures other than the above ones are similar to those of the first example embodiment, and thus the descriptions thereof will be omitted. The second example embodiment may be combined with the third example embodiment.

### <Face authentication environment determination method>

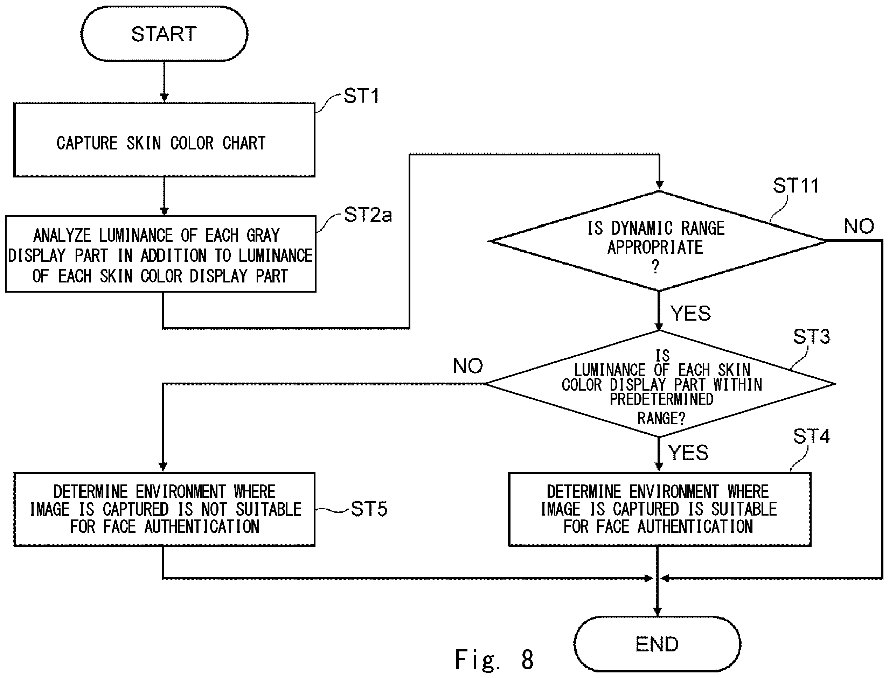

Next, a face authentication environment determination method according to the third example embodiment will be described with reference to Fig. 8. Fig. 8 is a flowchart showing the face authentication environment determination method according to the third example embodiment. In the description of Fig. 8, Figs. 6 and 7 are referred to as appropriate.

The face authentication environment determination method according to this example embodiment includes Step ST2a instead of Step ST2 shown in Fig. 4, and further includes Step ST11.

First, as shown in Fig. 8, the skin color chart 10 in which the first skin color display part BK, the second skin color display part WT, and the gray display parts GR are formed on the substrate 11 is captured by the camera 20 (Step ST1).

Next, the image analysis unit 110 analyzes luminance of each of the gray display parts GR in addition to luminance of each of the first skin color display part BK and the second skin color display part WT in the captured image of the skin color chart (Step ST2a).

Next, the dynamic range determination unit 130 determines whether or not the dynamic range of the camera 20 is appropriate based on the luminance of each of the gray display parts GR (Step ST11). If the dynamic range determination unit 130 determines that the dynamic range of the camera 20 is inappropriate (NO in Step ST11), the determination is ended. On the other hand, if the dynamic range determination unit 130 determines that the dynamic range of the camera 20 is appropriate (YES in Step ST11), the environment determination unit 120 determines whether or not the image capturing environment is suitable for face authentication based on the luminance of each of the first skin color display part BK and the second skin color display part WT (Step ST3). Step ST3 and the subsequent Steps are similar to those in the face authentication environment determination method according to the first example embodiment shown in Fig. 4, and thus the descriptions thereof will be omitted.

As described above, in the face authentication environment determination method according to the third example embodiment, the dynamic range is determined before the face authentication environment is determined. Further, the face authentication environment is determined only when the dynamic range is appropriate. Therefore, it is possible to more appropriately determine the face authentication environment than it is in the case of the face authentication environment determination method according to the first example embodiment.

### (Fourth Example Embodiment)

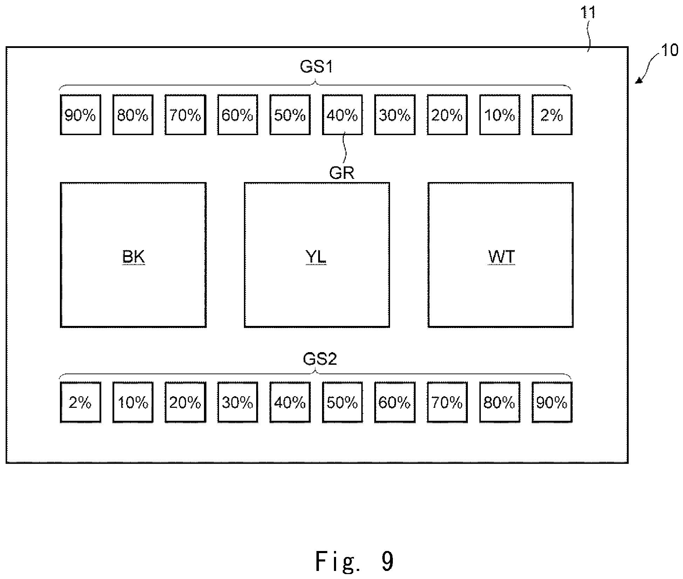

Next, a skin color chart in a face authentication environment determination system according to a fourth example embodiment will be described with reference to Fig. 9. Fig. 9 is a plan view showing the skin color chart in the face authentication environment determination system according to the fourth example embodiment.

The skin color chart 10 shown in Fig. 9 includes a third skin color display part YL in addition to the skin color chart 10 shown in Fig. 7.

As shown in Fig. 9, , the third skin color display part YL, like the first skin color display part BK and the second skin color display part WT, is formed on the substrate 11. The third skin color display part YL is disposed between the first skin color display part BK and the second skin color display part WT in the example shown in Fig. 9, but the position where the third skin color display part YL is disposed is not limited to a particular position.

The third skin color display part YL shows a skin color between the skin color in the first skin color display part BK and the skin color in the second skin color display part WT. The third skin color display part YL shows, for example, an average skin color of Mongoloid. Specifically, lightness L^{∗} of a skin color in the third skin color display part YL expressed in the CIE L^{∗}a^{∗}b^{∗} color space satisfies, for example, 62≤L^{∗}≤68. Further, chromaticity a^{∗} and chromaticity b^{∗} of the third skin color display part YL satisfy, for example, a^{∗}=11 and 18≤b^{∗}≤19, respectively.

By providing the third skin color display part YL, when a face authentication environment is being determined, it is possible to evaluate the environment in more detail than it is in the cases of the first to the third example embodiments. Specifically, it can be understood that the environment in which blocked-up shadows occur in the third skin color display part YL in addition to the first skin color display part BK is blacker than the environment in which blocked-up shadows occur only in the first skin color display part BK. It can also be understood that the environment in which blown-out highlights occur in the third skin color display part YL in addition to the second skin color display part WT is brighter than the environment in which blown-out highlights occur only in the second skin color display part WT. Based on the above-described evaluations, for example, the position where a camera is installed, the orientation of the camera, and the brightness of a place where a face image is captured can be easily adjusted.

Note that, in the example shown in Fig. 9, the third skin color display part YL has a square planar shape, but is not limited thereto.

The structures other than the above ones are similar to those of the third example embodiment, and thus the descriptions thereof will be omitted. The second example embodiment may be combined with the fourth example embodiment. Further, in the fourth example embodiment, the gray scale parts GS1 and GS2 may not be formed. That is, a structure in which the third skin color display part YL is added to the skin color chart 10 shown in Fig. 2 may be employed.

### (Fifth Example Embodiment)

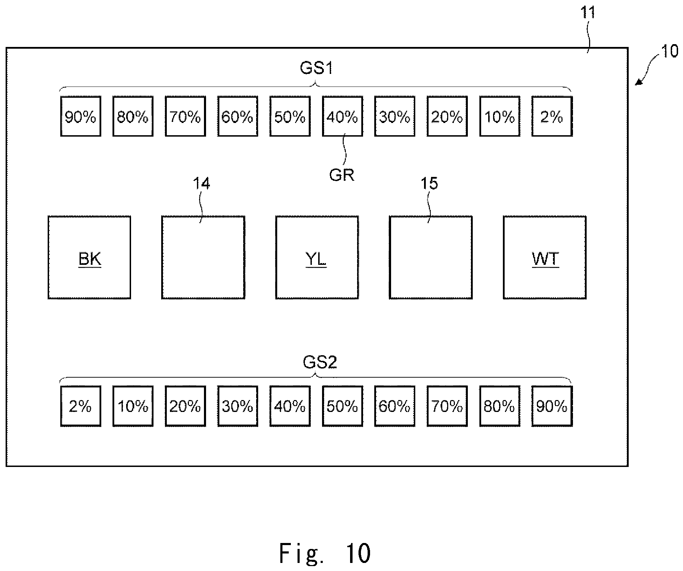

Next, a skin color chart in a face authentication environment determination system according to a fifth example embodiment will be described with reference to Fig. 10. Fig. 10 is a plan view showing the skin color chart in the face authentication environment determination system according to the fifth example embodiment.

The skin color chart 10 shown in Fig. 10 includes a fourth skin color display part 14 and a fifth skin color display part 15 in addition to the skin color chart 10 shown in Fig. 9.

As shown in Fig. 10, the fourth skin color display part 14 and the fifth skin color display part 15, like the above-described skin color display parts, are formed on the substrate 11. The position where the fourth skin color display part 14 is disposed and the position where the fifth skin color display part 15 is disposed are not limited to particular positions; in the example shown in Fig. 10, the fourth skin color display part 14 is disposed between the first skin color display part BK and the third skin color display part YL. Further, the fifth skin color display part 15 is disposed between the second skin color display part WT and the third skin color display part YL.

The fourth skin color display part 14 shows a skin color between the skin color in the first skin color display part BK and the skin color in the third skin color display part YL.

The fifth skin color display part 15 shows a skin color between the skin color in the second skin color display part WT and the skin color in the third skin color display part YL.

By providing the fourth skin color display part 14, when a face authentication environment is being determined, the environment can be evaluated in much more detail than it is in the case of the fourth example embodiment. Specifically, it is possible to distinguish the environment in which blocked-up shadows occur in the first skin color display part BK and the fourth skin color display part 14 from the environment in which blocked-up shadows occur only in the first skin color display part BK. Further, it is possible to distinguish the environment in which blocked-up shadows occur in the first skin color display part BK, the fourth skin color display part 14, and the third skin color display part YL from the environment in which blocked-up shadows occur only in the first skin color display part BK and the fourth skin color display part 14.

Similarly, by providing the fifth skin color display part 15, when a face authentication environment is being determined, the environment can be evaluated in much more detail than it is in the case of the fourth example embodiment. Specifically, it is possible to distinguish the environment in which blown-out highlights occur in the second skin color display part WT and the fifth skin color display part 15 from the environment in which blown-out highlights occur only in the second skin color display part WT. Further, it is possible to distinguish the environment in which blown-out highlights occur in the second skin color display part WT, the fifth skin color display part 15, and the third skin color display part YL from the environment in which blown-out highlights occur only in the second skin color display part WT and the fifth skin color display part 15.

Based on the above-described evaluations, for example, the position where a camera is installed, the orientation of the camera, and the brightness of a place where a face image is captured can be more easily adjusted.

Note that, in the example shown in Fig. 10, each of the fourth skin color display part 14 and the fifth skin color display part 15 has a square planar shape, but is not limited thereto. Further, the skin color chart 10 may include only one of the fourth skin color display part 14 and the fifth skin color display part 15.

Further, a plurality of fourth skin color display parts 14 showing skin colors different from each other may be provided in the skin color chart 10. Similarly, a plurality of fifth skin color display parts 15 showing skin colors different from each other may be provided in the skin color chart 10.

Further, in this example embodiment, the skin colors of the third skin color display part YL, the fourth skin color display part 14, and the fifth skin color display part 15 may show, for example, average skin colors in specific countries or regions.

The structures other than the above ones are similar to those of the fourth example embodiment, and thus the descriptions thereof will be omitted. The second example embodiment may be combined with the fifth example embodiment. Further, in the fifth example embodiment, the gray scale parts GS1 and GS2 may not be formed. That is, a structure in which the third skin color display part YL, the fourth skin color display part 14, and the fifth skin color display part 15 are added to the skin color chart 10 shown in Fig. 2 may be employed.

Each functional block in the above-described example embodiments may be configured by software, hardware, or both of them, and may be configured by one piece of hardware or software, or a plurality of pieces of hardware or software. The function (processing) of each apparatus may be implemented by a computer including a Central Processing Unit (CPU), a memory, and the like. For example, computer programs for performing the methods according to the example embodiments are stored in a storage device, and each function may be implemented by causing the CPU to execute the computer programs stored in the storage device.

These computer programs can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g., magneto-optical disks), CD-ROM (Read Only Memory), CD-R, CD-R/W, and semiconductor memories (such as mask ROM, PROM (Programmable ROM), EPROM (Erasable PROM), flash ROM, RAM (random access memory), etc.). The computer programs may be provided to a computer using any type of transitory computer readable media. Examples of transitory computer readable media include electric signals, optical signals, and electromagnetic waves. Transitory computer readable media can provide the computer programs to a computer via a wired communication line (e.g., electric wires, and optical fibers) or a wireless communication line.

Although the present disclosure has been described with reference to the example embodiments, the present disclosure is not limited to the above-described example embodiments. Various changes that may be understood by those skilled in the art may be made to the configurations and details of the present disclosure within the scope of the disclosure.

The whole or part of the example embodiments disclosed above can be described as, but not limited to, the following supplementary notes.

### (Supplementary note 1)

A face authentication environment determination method comprising:
capturing an image of a skin color chart comprising a first skin color display part configured to show a skin color of a Negroid and a second skin color display part configured to show a skin color of a Caucasoid, the first and the second skin color display parts being formed on a substrate;
analyzing luminance of each of the first and the second skin color display parts in the captured image of the skin color chart; and
determining whether or not an image capturing environment is suitable for face authentication based on the luminance of each of the first and the second skin color display parts.

### (Supplementary note 2)

The face authentication environment determination method according to Supplementary note 1, wherein
a plurality of gray display parts having different reflectances are formed on the substrate of the skin color chart,
the face authentication environment determination method further comprises:
   analyzing luminance of each of the plurality of gray display parts when the luminance of each of the first and the second skin color display parts is analyzed; and
   determining whether or not a dynamic range of image capturing means that has captured the image is appropriate based on the luminance of each of the plurality of gray display parts, and
when it is determined that the dynamic range is appropriate, it is determined whether or not the image capturing environment is suitable for face authentication.

### (Supplementary note 3)

The face authentication environment determination method according to Supplementary note 1 or 2, wherein
lightness L^{∗} of the first skin color display part in a CIE L^{∗}a^{∗}b^{∗} color space satisfies 20≤L^{∗}≤37, and
lightness L^{∗} of the second skin color display part in the CIE L^{∗}a^{∗}b^{∗} color space satisfies 74≤L^{∗}≤81.

### (Supplementary note 4)

The face authentication environment determination method according to any one of Supplementary notes 1 to 3, wherein each of the first and the second skin color display parts is formed in a three-dimensional shape imitating a human face.

### (Supplementary note 5)

The face authentication environment determination method according to any one of Supplementary notes 1 to 4, wherein the skin color chart further comprises a third skin color display part configured to show a skin color between the skin color in the first skin color display part and the skin color in the second skin color display part,
wherein lightness L^{∗} of the third skin color display part in the CIE L^{∗}a^{∗}b^{∗} color space satisfies 62≤L^{∗}≤68.

### (Supplementary note 6)

The face authentication environment determination method according to Supplementary note 5, wherein the skin color chart further comprises at least one of:
a fourth skin color display part configured to show a skin color between the skin color in the first skin color display part and the skin color in the third skin color display part; and
a fifth skin color display part configured to show a skin color between the skin color in the second skin color display part and the skin color in the third skin color display part.

### (Supplementary note 7)

The face authentication environment determination method according to any one of Supplementary notes 1 to 6, wherein the substrate is black.

### (Supplementary note 8)

A face authentication environment determination system comprising:
a skin color chart comprising a first skin color display part configured to show a skin color of a Negroid and a second skin color display part configured to show a skin color of a Caucasoid, the first and the second skin color display parts being formed on a substrate;
image capturing means for capturing an image of the skin color chart;
image analysis means for analyzing luminance of each of the first and the second skin color display parts in the image of the skin color chart captured by the image capturing means; and
environment determination means for determining whether or not an image capturing environment is suitable for face authentication based on the luminance of each of the first and the second skin color display parts.

### (Supplementary note 9)

The face authentication environment determination system according to Supplementary note 8, wherein
a plurality of gray display parts having different reflectances are formed on the substrate of the skin color chart,
the image analysis means analyzes luminance of each of the plurality of gray display parts, and
the face authentication environment determination system further comprises dynamic range determination means for determining whether or not a dynamic range of the image capturing means is appropriate based on the luminance of each of the plurality of gray display parts.

### (Supplementary note 10)

The face authentication environment determination system according to Supplementary note 8 or 9, wherein
lightness L^{∗} of the first skin color display part in a CIE L^{∗}a^{∗}b^{∗} color space satisfies 20≤L^{∗}≤37, and
lightness L^{∗} of the second skin color display part in the CIE L^{∗}a^{∗}b^{∗} color space satisfies 74≤L^{∗}≤81.

### (Supplementary note 11)

The face authentication environment determination system according to any one of Supplementary notes 8 to 10, wherein each of the first and the second skin color display parts is formed in a three-dimensional shape imitating a human face.

### (Supplementary note 12)

The face authentication environment determination system according to any one of Supplementary notes 8 to 11, wherein the skin color chart further comprises a third skin color display part configured to show a skin color between the skin color in the first skin color display part and the skin color in the second skin color display part,
wherein lightness L^{∗} of the third skin color display part in the CIE L^{∗}a^{∗}b^{∗} color space satisfies 62≤L^{∗}≤68.

### (Supplementary note 13)

The face authentication environment determination system according to Supplementary note 12, wherein the skin color chart further comprises at least one of:
a fourth skin color display part configured to show a skin color between the skin color in the first skin color display part and the skin color in the third skin color display part; and
a fifth skin color display part configured to show a skin color between the skin color in the second skin color display part and the skin color in the third skin color display part.

### (Supplementary note 14)

The face authentication environment determination system according to any one of Supplementary notes 8 to 13, wherein the substrate is black.

### (Supplementary note 15)

A face authentication environment determination apparatus comprising:
image analysis means for analyzing luminance of each of a first skin color display part configured to show a skin color of a Negroid and a second skin color display part configured to show a skin color of a Caucasoid in an image of a skin color chart comprising the first and the second skin color display parts formed on a substrate; and
environment determination means for determining whether or not an image capturing environment is suitable for face authentication based on the luminance of each of the first and the second skin color display parts.

### (Supplementary note 16)

The face authentication environment determination apparatus according to Supplementary note 15, wherein
a plurality of gray display parts having different reflectances are formed on the substrate of the skin color chart,
the image analysis means further analyzes luminance of each of the plurality of gray display parts, and
the face authentication environment determination apparatus further comprises dynamic range determination means for determining whether or not a dynamic range of image capturing means that has captured the image is appropriate based on the luminance of each of the plurality of gray display parts.

### (Supplementary note 17)

A non-transitory computer readable medium storing a face authentication environment determination program for causing a computer to:
analyze luminance of each of a first skin color display part configured to show a skin color of a Negroid and a second skin color display part configured to show a skin color of a Caucasoid in an image of a skin color chart comprising the first and the second skin color display parts formed on a substrate; and
determine whether or not an image capturing environment is suitable for face authentication based on the luminance of each of the first and the second skin color display parts.

### (Supplementary note 18)

The non-transitory computer readable medium according to Supplementary note 17, wherein
a plurality of gray display parts having different reflectances are formed on the substrate of the skin color chart,
the non-transitory computer readable medium stores the face authentication environment determination program for causing the computer to further:
   analyze luminance of each of the plurality of gray display parts when the luminance of each of the first and the second skin color display parts is analyzed; and
   determine whether or not a dynamic range of image capturing means that has captured the image is appropriate based on the luminance of each of the plurality of gray display parts, and
when it is determined that the dynamic range is appropriate, it is determined whether or not the image capturing environment is suitable for face authentication.

### (Supplementary note 19)

A face authentication environment determination method comprising:
analyzing luminance of each of a first skin color display part configured to show a skin color of a Negroid and a second skin color display part configured to show a skin color of a Caucasoid in an image of a skin color chart comprising the first and the second skin color display parts formed on a substrate; and
determining whether or not an image capturing environment is suitable for face authentication based on the luminance of each of the first and the second skin color display parts.

### (Supplementary note 20)

The face authentication environment determination method according to Supplementary note 19, wherein
a plurality of gray display parts having different reflectances are formed on the substrate of the skin color chart,
the face authentication environment determination method further comprises:
   analyzing luminance of each of the plurality of gray display parts when the luminance of each of the first and the second skin color display parts is analyzed; and
   determining whether or not a dynamic range of image capturing means that has captured the image is appropriate based on the luminance of each of the plurality of gray display parts, and
when it is determined that the dynamic range is appropriate, it is determined whether or not the image capturing environment is suitable for face authentication.

### Reference Signs List

- 10: SKIN COLOR CHART
- 11: SUBSTRATE
- BK: FIRST SKIN COLOR DISPLAY PART
- WT: SECOND SKIN COLOR DISPLAY PART
- YL: THIRD SKIN COLOR DISPLAY PART
- 14: FOURTH SKIN COLOR DISPLAY PART
- 15: FIFTH SKIN COLOR DISPLAY PART
- GR: GRAY DISPLAY PART
- GS1, GS2: GRAY SCALE PART
- 20: CAMERA
- 30: DISPLAY UNIT
- 100, 200: FACE AUTHENTICATION ENVIRONMENT DETERMINATION APPARATUS
- 110: IMAGE ANALYSIS UNIT
- 120: ENVIRONMENT DETERMINATION UNIT
- 130: DYNAMIC RANGE DETERMINATION UNIT
- 140: IMAGE ACQUISITION UNIT

## Claims

1. A face authentication environment determination method comprising:
capturing an image of a skin color chart comprising a first skin color display part configured to show a skin color of a Negroid and a second skin color display part configured to show a skin color of a Caucasoid, the first and the second skin color display parts being formed on a substrate;
analyzing luminance of each of the first and the second skin color display parts in the captured image of the skin color chart; and
determining whether or not an image capturing environment is suitable for face authentication based on the luminance of each of the first and the second skin color display parts.

2. The face authentication environment determination method according to Claim 1, wherein
a plurality of gray display parts having different reflectances are formed on the substrate of the skin color chart,
the face authentication environment determination method further comprises:
analyzing luminance of each of the plurality of gray display parts when the luminance of each of the first and the second skin color display parts is analyzed; and
determining whether or not a dynamic range of image capturing means that has captured the image is appropriate based on the luminance of each of the plurality of gray display parts, and
when it is determined that the dynamic range is appropriate, it is determined whether or not the image capturing environment is suitable for face authentication.

3. The face authentication environment determination method according to Claim 1 or 2, wherein
lightness L^{∗} of the first skin color display part in a CIE L^{∗}a^{∗}b^{∗} color space satisfies 20≤L^{∗}≤37, and
lightness L^{∗} of the second skin color display part in the CIE L^{∗}a^{∗}b^{∗} color space satisfies 74≤L^{∗}≤81.

4. The face authentication environment determination method according to any one of Claims 1 to 3, wherein each of the first and the second skin color display parts is formed in a three-dimensional shape imitating a human face.

5. The face authentication environment determination method according to any one of Claims 1 to 4, wherein the skin color chart further comprises a third skin color display part configured to show a skin color between the skin color in the first skin color display part and the skin color in the second skin color display part,
wherein lightness L^{∗} of the third skin color display part in the CIE L^{∗}a^{∗}b^{∗} color space satisfies 62≤L^{∗}≤68.

6. The face authentication environment determination method according to Claim 5, wherein the skin color chart further comprises at least one of:
a fourth skin color display part configured to show a skin color between the skin color in the first skin color display part and the skin color in the third skin color display part; and
a fifth skin color display part configured to show a skin color between the skin color in the second skin color display part and the skin color in the third skin color display part.

7. The face authentication environment determination method according to any one of Claims 1 to 6, wherein the substrate is black.

8. A face authentication environment determination system comprising:
a skin color chart comprising a first skin color display part configured to show a skin color of a Negroid and a second skin color display part configured to show a skin color of a Caucasoid, the first and the second skin color display parts being formed on a substrate;
image capturing means for capturing an image of the skin color chart;
image analysis means for analyzing luminance of each of the first and the second skin color display parts in the image of the skin color chart captured by the image capturing means; and
environment determination means for determining whether or not an image capturing environment is suitable for face authentication based on the luminance of each of the first and the second skin color display parts.

9. The face authentication environment determination system according to Claim 8, wherein
a plurality of gray display parts having different reflectances are formed on the substrate of the skin color chart,
the image analysis means analyzes luminance of each of the plurality of gray display parts, and
the face authentication environment determination system further comprises dynamic range determination means for determining whether or not a dynamic range of the image capturing means is appropriate based on the luminance of each of the plurality of gray display parts.

10. The face authentication environment determination system according to Claim 8 or 9, wherein
lightness L^{∗} of the first skin color display part in a CIE L^{∗}a^{∗}b^{∗} color space satisfies 20≤L^{∗}≤37, and
lightness L^{∗} of the second skin color display part in the CIE L^{∗}a^{∗}b^{∗} color space satisfies 74≤L^{∗}≤81.

11. The face authentication environment determination system according to any one of Claims 8 to 10, wherein each of the first and the second skin color display parts is formed in a three-dimensional shape imitating a human face.

12. The face authentication environment determination system according to any one of Claims 8 to 11, wherein the skin color chart further comprises a third skin color display part configured to show a skin color between the skin color in the first skin color display part and the skin color in the second skin color display part,
wherein lightness L^{∗} of the third skin color display part in the CIE L^{∗}a^{∗}b^{∗} color space satisfies 62≤L^{∗}≤68.

13. The face authentication environment determination system according to Claim 12, wherein the skin color chart further comprises at least one of:
a fourth skin color display part configured to show a skin color between the skin color in the first skin color display part and the skin color in the third skin color display part; and
a fifth skin color display part configured to show a skin color between the skin color in the second skin color display part and the skin color in the third skin color display part.

14. The face authentication environment determination system according to any one of Claims 8 to 13, wherein the substrate is black.

15. A face authentication environment determination apparatus comprising:
image analysis means for analyzing luminance of each of a first skin color display part configured to show a skin color of a Negroid and a second skin color display part configured to show a skin color of a Caucasoid in an image of a skin color chart comprising the first and the second skin color display parts formed on a substrate; and
environment determination means for determining whether or not an image capturing environment is suitable for face authentication based on the luminance of each of the first and the second skin color display parts.

16. The face authentication environment determination apparatus according to Claim 15, wherein
a plurality of gray display parts having different reflectances are formed on the substrate of the skin color chart,
the image analysis means further analyzes luminance of each of the plurality of gray display parts, and
the face authentication environment determination apparatus further comprises dynamic range determination means for determining whether or not a dynamic range of image capturing means that has captured the image is appropriate based on the luminance of each of the plurality of gray display parts.

17. A non-transitory computer readable medium storing a face authentication environment determination program for causing a computer to:
analyze luminance of each of a first skin color display part configured to show a skin color of a Negroid and a second skin color display part configured to show a skin color of a Caucasoid in an image of a skin color chart comprising the first and the second skin color display parts formed on a substrate; and
determine whether or not an image capturing environment is suitable for face authentication based on the luminance of each of the first and the second skin color display parts.

18. The non-transitory computer readable medium according to Claim 17, wherein
a plurality of gray display parts having different reflectances are formed on the substrate of the skin color chart,
the non-transitory computer readable medium stores the face authentication environment determination program for causing the computer to further:
analyze luminance of each of the plurality of gray display parts when the luminance of each of the first and the second skin color display parts is analyzed; and
determine whether or not a dynamic range of image capturing means that has captured the image is appropriate based on the luminance of each of the plurality of gray display parts, and
when it is determined that the dynamic range is appropriate, it is determined whether or not the image capturing environment is suitable for face authentication.

19. A face authentication environment determination method comprising:
analyzing luminance of each of a first skin color display part configured to show a skin color of a Negroid and a second skin color display part configured to show a skin color of a Caucasoid in an image of a skin color chart comprising the first and the second skin color display parts formed on a substrate; and
determining whether or not an image capturing environment is suitable for face authentication based on the luminance of each of the first and the second skin color display parts.

20. The face authentication environment determination method according to Claim 19, wherein
a plurality of gray display parts having different reflectances are formed on the substrate of the skin color chart,
the face authentication environment determination method further comprises:
analyzing luminance of each of the plurality of gray display parts when the luminance of each of the first and the second skin color display parts is analyzed; and
determining whether or not a dynamic range of image capturing means that has captured the image is appropriate based on the luminance of each of the plurality of gray display parts, and
when it is determined that the dynamic range is appropriate, it is determined whether or not the image capturing environment is suitable for face authentication.
